# FASCICULE DE BREVET EUROPEEN

(11) **EP 2 927 532 B1**
(45) Date de publication et mention de la délivrance du brevet: **11.01.2017**
(21) Numéro de dépôt: 15305461.4
(22) Date de dépôt: 30.03.2015
(51) Int. Cl.: F16F 3/04, B65G 69/00

(54) **AGENCEMENT BUTOIR AMORTISSEUR DE CHOCS SUR UN SUPPORT TEL QU'UN QUAI**
STOSSDÄMPFER-PUFFERANORDNUNG AUF EINER UNTERLAGE, WIE BEISPIELSWEISE EINEM ANLEGEPLATZ
SHOCK-ABSORBING BUMPER ARRANGEMENT ON A MOUNTING SUCH AS A DOCK

(30) Priorité: 31.03.2014 FR 1452822
(43) Date de publication de la demande: 07.10.2015
(73) Titulaire: Pommier, 95310 Saint Ouen l'Aumone (FR)
(72) Inventeur: Preud'homme, Thierry, 95450 COMMENY (FR); Aubignat, Frédéric, 60660 CIRES LES MELLO (FR)
(74) Mandataire: Lefevre-Groboillot, David André

(56) Documents cités:
- WO-A2-2007/076507
- DE-U1-202013 003 796
- FR-A- 1 200 572
- FR-A1- 2 841 883

## Description

L'invention concerne un agencement butoir amortisseur de chocs sur un support tel qu'un quai, notamment de chocs produits par un véhicule, du type comprenant une partie de base destinée à être solidaire du support, en général fixe, et une partie exposée aux chocs et montée sur la partie de base, de façon déplaçable en translation sous l'effet des chocs à l'encontre de moyens amortisseurs interposés entre les deux parties.

L'invention concerne également un procédé d'assemblage de l'agencement butoir amortisseur.

Des agencements butoirs de ce type sont déjà connus. La demande de brevet français FR 1 257 330 décrit par exemple un dispositif butoir amortisseur pour véhicule, qui comprend un boîtier destiné à être fixé sur un support notamment prévu sur un véhicule, qui comprend un rouleau tampon cylindrique monté rotatif dans un carter et déplaçable perpendiculairement à son axe de rotation à l'encontre de ressorts de rappel. Ce dispositif présente l'inconvénient que la surface de contact sur laquelle s'exercent les chocs est faible, tout en ayant une structure complexe.

La demande de brevet européen EP 10 164 383.1 décrit un butoir amortisseur de chocs pour la protection d'un véhicule lors d'un contact violent avec un support fixe, tel qu'un quai. L'organe de contact sur lequel s'exerce le choc est en forme d'une plaque de patin allongé de type lame et fixé sur la plaque de base solidaire du véhicule par un dispositif amortisseur comprenant un certain nombre de corps élastiquement déformable auquel la plaque de contact est reliée à l'aide de pattes d'assemblage s'étendant dans ces corps pour y être ancrés à l'aide d'axes logés dans les corps amortisseurs. Cet amortisseur présente une structure complexe et pas du tout appropriée pour être pourvue d'une face de contact extérieure d'une étendue relativement importante pour être fixée sur une surface tel qu'un quai.

Des agencements butoir amortisseur similaires sont connus des documents FR 2 841 883 et DE 20 2013 003 796 U1.

L'invention a pour but de proposer un agencement butoir susceptible de pallier les inconvénients des dispositifs butoirs connus.

Pour atteindre ce but, l'agencement butoir selon l'invention est caractérisé en ce que la partie de base comporte une paroi de fond et des parois latérales s'étendant perpendiculairement à partir du bord périphérique de la plaque de fond, que la partie déplaçable sous l'effet d'un choc est en forme d'un capot comportant une paroi extérieure plane et des parois latérales complémentaires aux parois latérales de la partie de base et en ce que les moyens amortisseurs sont formés par une pluralité d'éléments élastiques amortisseurs interposés entre la paroi de fond de la partie de base et la paroi extérieure du capot, en étant en contact d'appui avec ces parois.

Selon une caractéristique avantageuse de l'invention, l'agencement butoir est caractérisé en ce que le capot est maintenu sur la partie de base par des moyens d'assemblages reliant les parois latérales du capot et de la partie de base, entre elles, sous l'effet des éléments élastiques précontraints.

Selon une autre caractéristique de l'invention, l'agencement butoir est caractérisé en ce que les moyens d'assemblage sont des tiges qui traversent transversalement les parois latérales de la partie de base et du capot, en passant par des trous de passage pratiqués dans ces parois, les trous dans les parois de la partie de base ou du capot étant des trous oblongs dans la direction du déplacement du capot, sur la partie de base, tandis que les autres trous sont des trous circulaires.

Selon encore une autre caractéristique de l'invention, l'agencement butoir est caractérisé en ce que la paroi de fond de la partie de base porte sur sa face interne des embouts de logement des éléments élastiques prenant alors appui par une extrémité sur la face interne de la paroi et par leur autre extrémité sur la face interne de la paroi extérieure du capot.

Selon encore une autre caractéristique de l'invention, l'agencement butoir est caractérisé en ce que l'étendue de la face extérieure du capot est variable par le choix et la répartition des éléments élastiques.

Selon encore une autre caractéristique de l'invention, l'agencement butoir est caractérisé en ce que l'épaisseur de l'agencement est variable par le choix de la longueur des éléments élastiques et, le cas échéant, par la précontrainte de ceux-ci.

Selon encore une autre caractéristique de l'invention, l'agencement butoir est caractérisé en ce que les éléments élastiques sont des ressorts hélicoïdaux.

Le procédé d'assemblage de l'agencement butoir selon l'invention est caractérisé en ce que l'on fixe la partie de base par sa paroi de fond sur un support tel qu'un quai, met en place sur la face de fond les éléments élastiques, positionne le capot sur la partie de base en comprimant les éléments élastiques d'un degré prédéterminé et relie les parois latérales de la partie de base et du capot dans cette position précontrainte des éléments élastiques, de façon à permettre le déplacement du capot sur la partie de base sous l'effet de chocs, entre cette position de repos du capot dans laquelle les éléments élastiques sont précontraints, et des positions enfoncées d'amortissement de chocs sur le capot.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue en perspective d'un agencement butoir amortisseur selon l'invention ;
- la figure 2 est une vue éclatée, en perspective de l'agencement de la figure 1 ;

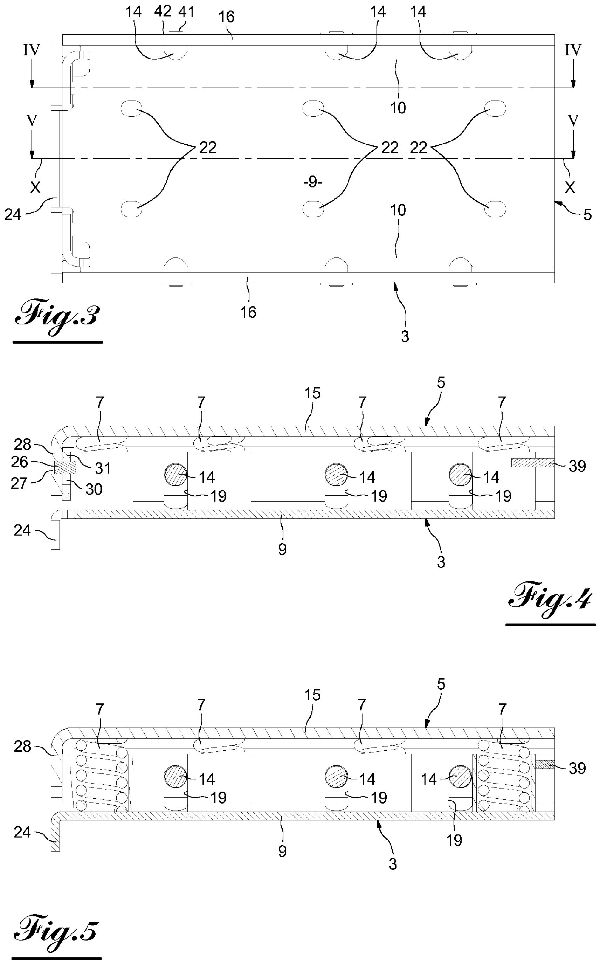

- la figure 3 est une vue de dessus de l'agencement butoir de la figure 1 ;
- la figure 4 est une vue en coupe selon la ligne IV-IV de la figure 3 ;
- la figure 5 est une vue en coupe selon la ligne V-V de la figure 3 ; et
- les figures 6A à 6C sont des vues en coupe similaires à la figure 4 et montrent trois phases de l'assemblage de l'agencement butoir selon l'invention.

L'agencement butoir amortisseur de chocs, selon l'invention, tel que représenté sur les figures, est parfaitement adapté pour être monté sur un quai, puisqu'il présente l'avantage d'avoir une grande surface extérieure de contact destinée à recevoir les chocs à amortir, une hauteur ou épaisseur relativement faible et une structure simple.

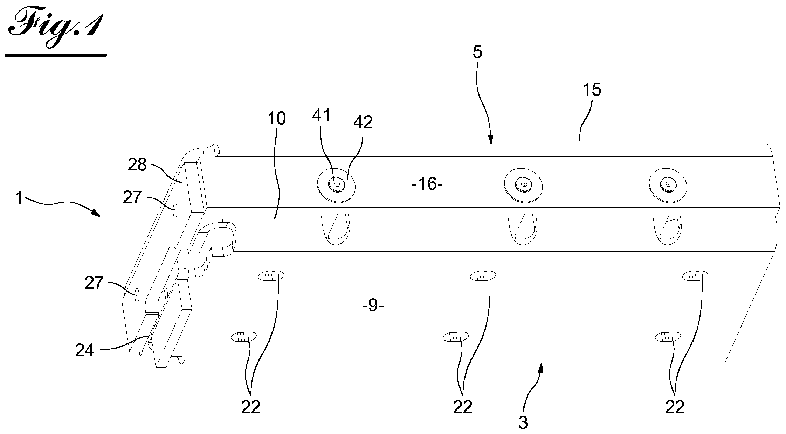

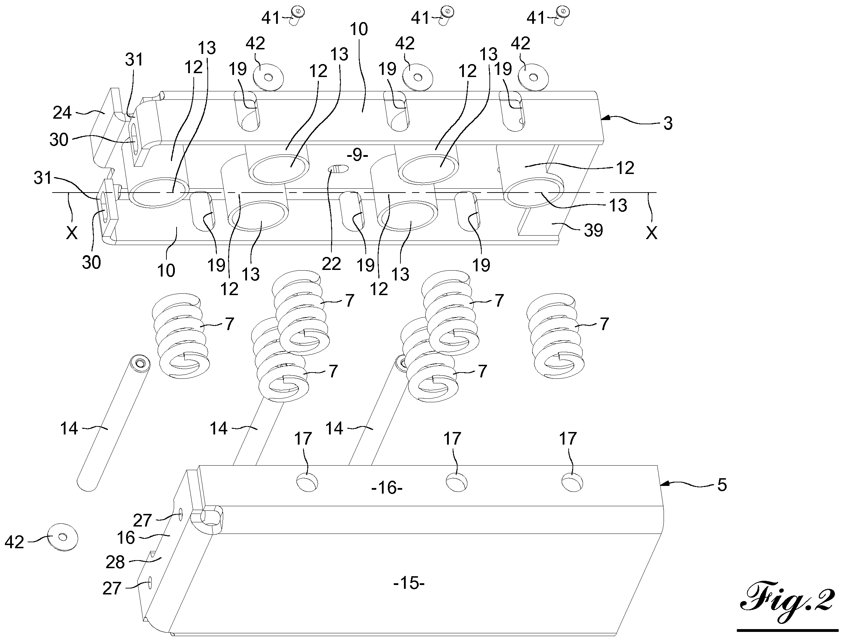

Comme le montrent notamment les figures 1 et 2, l'agencement selon l'invention présente la forme d'un boîtier parallélépipédique 1 en tout matériau rigide approprié, comportant une partie de base 3 destinée à être fixée sur une surface de support tel qu'un quai et une partie 5 en forme d'un capot sur lequel s'exercent les chocs à amortir. Le couvercle recouvre la partie de base et est déplaçable en translation sous l'effet de chocs par rapport à la partie de base, à l'encontre d'une pluralité d'éléments élastiques amortisseurs 7 interposés entre la partie de base et le capot.

Plus précisément, la partie de base 3 comprend une paroi de fond plane 9 par laquelle l'agencement sera fixé sur la surface de support, et des parois latérales 10 qui s'étendent perpendiculairement à partir du bord périphérique de la paroi 9. La partie de base 3 est pourvue d'une pluralité d'embouts tubulaires 12 qui s'étendent perpendiculairement à partir de la face intérieure de la paroi de fond 9 et qui sont ouverts à leurs extrémités libres 13. Ces embouts constituent chacun un logement pour un élément élastique 7. Ces éléments, dans l'exemple représenté, en forme de ressorts hélicoïdaux, sont chacun disposés en partie à l'intérieur d'un embout 12 en venant en appui par une extrémité sur la paroi de fond 9 et par l'autre extrémité sur la face intérieure du capot 5. Dans l'exemple représenté, l'agencement butoir comprend six ressorts 7 qui sont répartis de façon qu'un ressort soit situé au niveau de chaque extrémité et de l'axe longitudinal X-X, tandis que les quatre ressorts 7 restant sont disposés en deux groupes de deux entre les ressorts d'extrémité.

Le capot présente une forme complémentaire à celle de la partie de base et comprend donc une paroi extérieure plane 15 sur laquelle s'exercent les chocs à amortir et des parois latérales 16 qui s'étendent perpendiculairement à partir du bord périphérique de la paroi de contact 15. On constate que les embouts du logement 12 et ainsi les ressorts 7 sont répartis sur la surface des parois planes 9 et 15 et on comprend qu'on peut augmenter ou diminuer les dimensions de la paroi extérieure 15 de réception de chocs du capot en choisissant le nombre de ressorts approprié.

Le capot 5 est assemblé sur la partie de base 3 par une pluralité de tiges 14, au nombre de trois dans l'exemple représenté, qui traversent le boîtier, transversalement par rapport à la direction longitudinale X-X du boîtier, en passant chacune, entre les ressorts 7, par un trou circulaire 17 pratiqué dans chaque paroi latérale longitudinale 16 du capot et un trou oblong 19 pratiqué dans chaque paroi latérale longitudinale 10 de la partie de base. Les trous oblongs 19 s'étendent dans leur paroi 10 perpendiculairement à la paroi de fond 9 de façon à permettre un déplacement du capot perpendiculairement par rapport à la paroi de fond 9, entre une position de repos c'est-à-dire lorsqu'aucun choc n'est exercé sur la face extérieure de la paroi extérieure de contact 15 du capot, et une position enfoncée à l'encontre des ressorts de rappel 7 suite à un choc. Dans sa position de repos, chaque tige 14 est en appui contre l'extrémité extérieure du trou oblong 19. Dans la position d'enfoncement maximale du capot chaque tige est en appui contre l'extrémité intérieure de son trou oblong de passage.

Il est à noter que, dans la position de repos du capot, les ressorts 7 sont précontraints de façon que les tiges 14 soient appliquées sous pression contre les extrémités supérieures des trous oblongs.

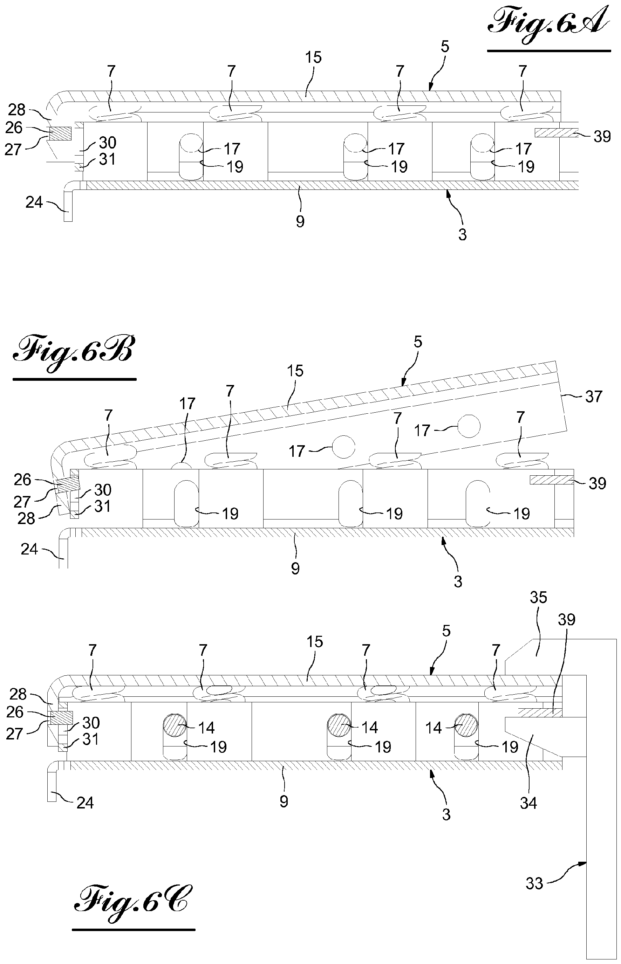

On expliquera ci-après, en se référant aux figures 6A à 6C l'assemblage de l'agencement butoir, plus précisément le montage du capot 5 sur la partie de base 3.

Tout d'abord, il convient de fixer la partie de base 3 sur la face du support, par exemple d'un quai. L'agencement butoir de l'exemple représenté sera disposé verticalement sur la surface, c'est-à-dire l'axe longitudinal X-X et orienté verticalement. La fixation se fait par exemple par des vis dont les trous 22 pratiqués dans la paroi de fond 9 sont visibles sur la figure 1. Pour assurer un bon ancrage dans le support, la paroi de fond comporte au niveau de son extrémité supérieure une patte d'ancrage 24, qui s'étend perpendiculairement vers l'extérieur à partir du plan de la paroi 9. Après la pose de la partie de base sur le quai, les ressorts 7 sont mis en place dans leurs embouts de logement 12. Puis le capot 5 est positionné sur la partie de base 3 de la manière représentée à la figure 6A, en étant légèrement latéralement décalé par rapport à la partie de base. Dans cette position deux pions 26 sont placés chacun dans un trou 27 (figure 1) pratiqué dans la paroi latérale horizontale supérieure 28 du capot. Ce dernier est légèrement enfoncé à l'encontre du ressort de rappel 7 adjacente à la paroi 28, pour que les extrémités des pions 26 puissent s'engager dans des trous oblongs 30 qui sont pratiqués dans la paroi horizontale supérieure 31 de la partie de base 3. Le capot est déplacé à cette fin latéralement dans sa position appropriée sur la partie de base. Les trous oblongs sont orientés dans la direction de déplacement du capot sur la partie de base, c'est-à-dire dans la direction perpendiculairement à la paroi de fond 9. A ce stade du montage le couvercle occupe la position qui est représentée à la figure 6B, c'est-à-dire il est incliné sous l'effet du ressort comprimé.

Puis tous les ressorts sont mis sous contrainte par serrage avec une presse représentée schématiquement en 33, entre deux pattes de serrage 34, 35, c'est-à-dire déplaçant l'extrémité inférieure libre 37 de la paroi de contact 15 du capot 5, qui est opposée à l'extrémité supérieure qui est reliée par les pions 26 à la partie de base 3, en direction de la paroi de fond 9 de la partie de base jusqu'à ce que la face de contact 15 soit sensiblement parallèle à la paroi de base 9, comme cela est montré à la figure 6C. Pour obtenir ce déplacement, la patte de serrage supérieure 35 vient en prise sur l'extrémité 37 du capot et la patte inférieure 34 sous une traverse 39 qui s'étend perpendiculairement entre les extrémités inférieures des parois latérales longitudinales 10 de la partie de base 3. A cette fin, la partie de base 3 est dépourvue à son extrémité inférieure d'une paroi latérale transversale où cette paroi possède des évidements permettant l'engagement de la patte de serrage 34 sous la traverse 39.

Après avoir amené le capot dans sa position parallèle à la partie de base 3, et ainsi après avoir comprimé tous les ressorts 7, on fait passer les tiges d'assemblage 14 à travers leurs trous de passage 17 dans les parois latérales longitudinales 16 du capot 5 et des trous oblongs 19 qui sont pratiqués dans les parois latérales longitudinales 10 de la partie de base 3. Puis les tiges sont verrouillées dans leur position d'assemblage par disposition d'éléments de verrouillage 41 sur chaque extrémité de tiges qui comportent des vis 41 destinées à être vissées dans les extrémités des tiges 14 et des rondelles d'interposition 42. Après l'installation des tiges, l'agencement butoir selon l'invention se trouve dans sa position de repos, prêt à amortir des chocs pouvant s'exercer sur le capot.

Il ressort de la description qui vient d'être faite et des figures, que l'agencement butoir selon l'invention présente les avantages majeurs de présenter une épaisseur relativement faible, mais une surface de contact importante dont l'étendue peut être choisie en prévoyant un nombre approprié de ressorts. La faible épaisseur ou hauteur est possible du fait que les ressorts sont directement en appui contre la face de fond de la partie de base 3 et la paroi de contact 15 du capot 5. Ainsi la structure de l'agencement butoir est extrêmement simple et ne comporte qu'un très faible nombre de composants. L'assemblage est également très simple et ne nécessite qu'un nombre d'opérations très limitées et simples.

Bien entendu de diverses modifications peuvent être apportées à l'agencement butoir tel que représenté et décrit ci-avant, sans sortir du cadre de l'invention. Ainsi les ressorts 7 pourraient être remplacés par tout autre élément élastiquement déformable approprié et d'autres organes de maintien du capot sur la partie de base pourraient être utilisés à la place des tiges transversales. L'épaisseur est variable en fonction de la longueur des ressorts et, le cas échéant, du choix du degré de la précontrainte.

## Revendications

1. Agencement butoir amortisseur de chocs, adapté pour être monté sur un support tel qu'un quai, du type comprenant une partie de base (3) qui est destinée à être solidarisée du support et comporte une paroi de fond (9) et des parois latérales (10) s'étendant perpendiculairement à la paroi de fond, et un capot (9) exposé aux chocs, qui comporte une paroi extérieure plane (15) et des parois latérales perpendiculaires (16), complémentaires aux parois latérales (10) de la partie de base (3), et est monté sur la partie de base, avec ses parois latérales (16) recouvrant les parois latérales (10) de la partie de base (3), de façon déplaçable en translation sous l'effet des chocs, à l'encontre de moyens amortisseurs élastiques (7) interposés entre la paroi de fond (9) de la partie de base (3) et la paroi plane (15) du capot (5), **caractérisé en ce qu'**une paroi latérale (28) du capot (5) porte sur sa face intérieure au moins un pion (26) adapté pour s'engager dans un trou oblong (30) pratiqué dans la paroi latérale en regard de la partie de base (3) et s'étendant dans la direction du déplacement du capot sur la partie de base, sous l'effet d'un choc, et **en ce que** le capot (5) et la partie de base (3) sont reliés l'un à l'autre par au moins deux éléments en forme de tiges (14) chacune traversant des trous (19) axialement alignés dans une paire de parois latérales en regard du capot et de la partie de base, adjacentes à la paroi porteuse du pion (26), l'un des trous alignées (19) étant un trou oblong orienté dans la direction de déplacement du capot (5).

2. Agencement butoir selon la revendication 1, **caractérisé en ce que** les deux paires de parois latérales des capots (5) et de la partie de base (3), qui sont reliées, sont traversées par au moins une tige unique.

3. Agencement butoir selon l'une des revendications 1 ou 2, **caractérisé en ce que** le côté latéral de la face du capot, opposée à celle de la paroi porteuse du pion (26) est libre.

4. Agencement butoir selon la revendication 3, **caractérisé en ce que** la partie de base (3) comporte du côté libre du capot une traverse (39) parallèle à sa paroi latérale, et que cette dernière est pourvue d'évidements permettant l'engagement sous la traverse d'une patte d'un dispositif de serrage dont l'autre patte est adaptée de venir en appui sur le bord libre (37) du capot.

5. Agencement butoir selon l'une des revendications 1 à 4, **caractérisé en ce que** le capot (5) comprend au moins deux pions (26).

6. Agencement butoir selon l'une des revendications 2 à 5, **caractérisé en ce qu'**il comprend une pluralité de tiges d'assemblage (14), qui s'étendent parallèlement les unes aux autres dans un plan parallèle au plan de la paroi de fond (9) de la partie de base (3).

7. Agencement butoir selon l'une des revendications 1 à 6, **caractérisé en ce que** la paroi de fond (9) de la partie de base (3) porte sur sa face interne des embouts (12) de logement des éléments élastiques (7) prenant alors appui par une extrémité sur la face interne de la paroi (9) et par leur autre extrémité sur la face interne de la paroi extérieure (15) du capot (5).

8. Agencement butoir selon l'une des revendications 1 à 7, **caractérisé en ce que** l'étendue de la face extérieure (15) du capot (5) est variable par variation du nombre et/ou la répartition des éléments élastiques (7).

9. Agencement butoir selon l'une des revendications 1 à 8, **caractérisé en ce que** l'épaisseur de l'agencement est variable par le choix de la longueur des éléments élastiques (7) et, le cas échéant, par la précontrainte de ceux-ci.

10. Agencement butoir selon l'une des revendications 1 à 9, **caractérisé en ce que** les éléments amortisseurs élastiques (7) sont précontraints lorsque le capot (5) est monté sur la partie de base (3).

11. Procédé d'assemblage de l'agencement butoir selon l'une des revendications 1 à 10, selon lequel on fixe la partie de base (3) par sa paroi de fond (9) sur un support tel qu'un quai, puis on place sur la face de fond (9) des éléments élastiques (7) et monte le capot (5) sur la partie de base (3), **caractérisé en ce que**, lors de ce montage, on engage le pion (26) dans le trou oblong (30) de la paroi de base, en comprimant légèrement l'élément amortisseur élastique (7) voisin et exerce au niveau de la paroi opposée du capot (5) une force le déplaçant en direction de la paroi de fond (9) de la partie de base (3), en comprimant les éléments élastiques (7), jusqu'à ce que le capot soit sensiblement parallèle à la paroi de fond (9) de la partie de base, et on fait passer les tiges d'assemblage (14) à travers les trous des paires de parois latérales du capot et de la partie de base.

## Patentansprüche

1. Stoßdämpfer-Pufferanordnung, ausgebildet, um auf einem Halter wie einem Kai angeordnet zu sein, des Typs, der einen Basisteil (3), der bestimmt ist, mit dem Halter fest verbunden zu sein, und eine Bodenwand (9) und Seitenwände (10) aufweist, die sich senkrecht zur Bodenwand erstrecken, und eine den Stößen ausgesetzte Abdeckung (9) umfasst, die eine ebene Außenwand (15) und senkrechte Seitenwände (16) aufweist, die zu den Seitenwänden (10) des Basisteils (3) komplementär sind, und auf dem Basisteil mit ihren Seitenwänden (16), die die Seitenwände (10) des Basisteils (3) bedecken, unter der Wirkung der Stöße gegen elastische Stoßdämpfermittel (7), die zwischen der Bodenwand (9) des Basisteils (3) und der ebenen Wand (15) der Abdeckung (5) angeordnet sind, verschiebend verlagerbar montiert ist, **dadurch gekennzeichnet, dass** eine Seitenwand (28) der Abdeckung (5) auf ihrer Innenfläche mindestens einen Zapfen (26) trägt, der ausgebildet ist, um in ein Langloch (30) einzugreifen, das in die Seitenwand gegenüber dem Basisteil (3) eingearbeitet ist und sich in der Richtung der Verlagerung der Abdeckung auf dem Basisteil unter der Wirkung eines Stoßes erstreckt, und dass die Abdeckung (5) und das Basisteil (3) mit Hilfe von mindestens zwei stabförmigen Elementen (14) miteinander verbunden sind, die jeweils Löcher (19) durchqueren, die in einem Seitenwandpaar gegenüber der Abdeckung und des Basisteils axial fluchten, benachbart zur tragenden Wand des Zapfens (26), wobei eines der fluchtenden Löcher (19) ein Langloch ist, das in die Verlagerungsrichtung der Abdeckung (5) zeigt.

2. Pufferanordnung nach Anspruch 1, **dadurch gekennzeichnet, dass** die zwei Seitenwandpaare der Abdeckungen (5) und des Basisteils (3), die verbunden sind, von mindestens einem einzigen Stab durchquert werden.

3. Pufferanordnung nach einem der Ansprüche 1 oder 2, **dadurch gekennzeichnet, dass** die seitliche Seite der Fläche der Abdeckung gegenüber der der tragenden Wand des Zapfens (26) frei ist.

4. Pufferanordnung nach Anspruch 3, **dadurch gekennzeichnet, dass** das Basisteil (3) auf der freien Seite der Abdeckung einen zu seiner Seitenwand parallelen Querträger (39) aufweist und dass diese mit Aussparungen ausgestattet ist, die das Eingreifen unter dem Querträger einer Klaue einer Spannvorrichtung erlaubt, deren andere Klaue ausgebildet ist, um sich auf dem freien Rand (37) der Abdeckung abzustützen.

5. Pufferanordnung nach einem der Ansprüche 1 bis 4, **dadurch gekennzeichnet, dass** die Abdeckung (5) mindestens zwei Zapfen (26) umfasst.

6. Pufferanordnung nach einem der Ansprüche 2 bis 5, **dadurch gekennzeichnet, dass** sie eine Vielzahl von Verbindungsstangen (14) umfasst, die sich in einer zur Ebene der Bodenwand (9) des Basisteils (3) parallelen Ebene parallel zueinander erstrecken.

7. Pufferanordnung nach einem der Ansprüche 1 bis 6, **dadurch gekennzeichnet, dass** die Bodenwand (9) des Basisteils (3) auf ihrer Innenfläche Aufnahmehülsen (12) der elastischen Elemente (7) trägt, die sich mit einem Ende auf der Innenfläche der Wand (9) und mit ihren anderen Ende auf der Innenfläche der Außenwand (15) der Abdeckung (5) abstützen.

8. Pufferanordnung nach einem der Ansprüche 1 bis 7, **dadurch gekennzeichnet, dass** der Bereich der Außenfläche (15) der Abdeckung (5) mittels Variation der Anzahl und/oder der Verteilung der elastischen Elemente (7) variabel ist.

9. Pufferanordnung nach einem der Ansprüche 1 bis 8, **dadurch gekennzeichnet, dass** die Dicke der Anordnung mittels Wahl der Länge der elastischen Elemente (7) und gegebenenfalls mittels der Vorspannung derselben variabel ist.

10. Pufferanordnung nach einem der Ansprüche 1 bis 9, **dadurch gekennzeichnet, dass** die elastischen Dämpferelemente (7) vorgespannt sind, wenn die Abdeckung (5) auf dem Basisteil (3) montiert ist.

11. Montageverfahren der Pufferanordnung nach einem der Ansprüche 1 bis 10, gemäß dem das Basisteil (3) mittels seiner Bodenwand (9) auf einem Halter wie einem Kai montiert wird, man danach auf der Bodenfläche (9) elastische Elemente (7) montiert und die Abdeckung (5) auf das Basisteil (3) setzt, **dadurch gekennzeichnet, dass** bei dieser Montage der Zapfen (26) in das Langloch (30) der Basiswand eingesetzt wird, indem das benachbarte elastische Dämpferelement (7) leicht komprimiert wird, und im Bereich der gegenüberliegenden Wand der Abdeckung (5) eine Verlagerungskraft in Richtung der Bodenwand (9) des Basisteils (3) ausgeübt wird, wobei die elastischen Elemente (7) komprimiert werden, bis die Abdeckung etwa parallel zur Bodenwand (9) des Basisteils ist, und die Verbindungsstangen (14) durch die Löcher der Seitenwandpaare der Abdeckung und des Basisteils geführt werden.

## Claims

1. A shock-absorbing bumper arrangement, suitable for being mounted on a support such as a dock, of the type comprising a base part (3) that is intended to be secured to the support and includes a bottom wall (9) and side walls (10) extending perpendicular to the bottom wall, and a cover (9) exposed to the impacts, which includes a planar outer wall (15) and perpendicular side walls (16), complementary to the side walls (10) of the base part (3), and is mounted on the base part, with its side walls (60) covering the side walls (10) of the base part (3), translatable under the effect of the impacts, against elastic shock absorbing means (7) inserted between the bottom wall (9) of the base part (3) and the planar wall (15) of the cover (5), **characterized in that** a side wall (28) of the cover (5) bears, on its lower face, at least one pin (26) suitable for being engaged in an oblong hole (30) formed in the side wall across from the base part (3) and extending in the direction of the movement of the cover over the base part, under the effect of an impact, and **in that** the cover (5) and the base part (3) are connected to one another by at least two rod-forming elements (14) each traversing holes (19) axially aligned in a pair of side walls across from the cover and the base part, adjacent to the support wall of the pin (26), one of the aligned holes (19) being an oblong hole oriented in the movement direction of the cover (5).

2. The bumper arrangement according to claim 1, **characterized in that** the two pairs of side walls of the covers (5) and the base part (3), which are connected, are traversed by at least a single rod.

3. The bumper arrangement according to one of claims 1 or 2, **characterized in that** the lateral side of the face of the cover, opposite that of the support wall of the pin (26), is free.

4. The bumper arrangement according to claim 3, **characterized in that** the base part (3) includes, on the free side of the cover, a crosspiece (39) parallel to its side wall, and **in that** the latter is provided with recesses making it possible to engage, below the crosspiece, a tab of a gripping device, the other tab of which is suitable for bearing on the free edge (37) of the cover.

5. The bumper arrangement according to one of claims 1 to 4, **characterized in that** the cover (5) comprises at least two pins (26).

6. The bumper arrangement according to one of claims 2 to 5, **characterized in that** it comprises a plurality of assembly rods (14), which extend parallel to one another in a plane parallel to the plane of the bottom wall (9) of the base part (3).

7. The bumper arrangement according to one of claims 1 to 6, **characterized in that** the bottom wall (9) of the base part (3) bears, on its inner face, end-pieces (12) for housing elastic elements (7) then bearing by one end on the inner face of the wall (9) and by their other end on the inner face of the outer wall (15) of the cover (5).

8. The bumper arrangement according to one of claims 1 to 7, **characterized in that** the expanse of the outer face (15) of the cover (5) is variable by varying the number and/or distribution of the elastic elements (7).

9. The bumper arrangement according to one of claims 1 to 8, **characterized in that** the thickness of the arrangement is variable by the choice of the length of the elastic elements (7) and, if applicable, by the pre-stress thereof.

10. The bumper arrangement according to one of claims 1 to 9, **characterized in that** the elastic shock-absorbing elements (7) are pre-stressed when the cover (5) is mounted on the base part (3).

11. A method for assembling the bumper arrangement according to one of claims 1 to 10, wherein the base part (3) is fastened by its bottom wall (9) on a support such as a dock, then elastic elements (7) are placed on the bottom face (9) and the cover (5) is mounted on the base part (3), **characterized in that**, during this assembly, the pin (26) is engaged in the oblong hole (30) of the base wall, slightly compressing the adjacent elastic shock-absorbing element (7), and exerts, at the opposite wall of the cover (5), a force moving it toward the bottom wall (9) of the base part (3), compressing the elastic elements (7), until the cover is substantially parallel to the bottom wall (9) of the base part, and the assembly rods (14) are passed through the holes of the pairs of side walls of the cover and the base part.
